# EUROPÄISCHE PATENTANMELDUNG

(11) **EP 2 390 034 A1**
(43) Veröffentlichungstag der Anmeldung: **30.11.2011**
(21) Anmeldenummer: 11164816.8
(22) Anmeldetag: 04.05.2011
(51) Int. Cl.: B23D 59/00

(54) **Werkstückbearbeitungsvorrichtung**

(30) Priorität: 27.05.2010 DE 202010007317 U
(71) Anmelder: Einhell Germany AG, 94405 Landau / Isar (DE)
(72) Erfinder: Ellerstorfer, Thomas, 93413 Cham (DE)
(74) Vertreter: Benninger, Johannes

(57) **Zusammenfassung**

Die vorliegende Erfindung betrifft eine Werkstückbearbeitungsvorrichtung (1). Die Werkstückbearbeitungsvorrichtung (1) umfasst einen Arbeitstisch (3) mit Tischplatte (4) und einem ersten Kanalabschnitt (11). Weiter umfasst die Werkstückbearbeitungsvorrichtung (1) eine Saugvorrichtung (7) mit Saugmotor und einem zweiten Kanalabschnitt (13). Ferner eine Stützeinheit (5), die einen Aufnahmeraum (9) zur Aufnahme der Saugvorrichtung (7) ausgebildet hat und einen Tragrahmen (19) zum Anordnen des Arbeitstisches (3) in einer vordefinierten Position an der Stützeinheit (5). Bei einer Anordnung des Arbeitstisches (3) in der vordefinierten Position an der Stützeinheit (5) und bei Anordnung der Saugvorrichtung (7) im Aufnahmeraum (9) der Stützeinheit (5) greifen der erste und der zweite Kanalabschnitt (11, 13) ineinander und/oder sind derart miteinander verbunden, dass ein mittels der Saugvorrichtung (7) erzeugter Saugluftstrom durch den ersten und den zweiten Kanalabschnitt (11, 13) leitbar ist.

## Beschreibung

Die vorliegende Erfindung betrifft eine Werkstückbearbeitungsvorrichtung. Die Werkstückbearbeitungsvorrichtung umfasst einen Arbeitstisch mit Tischplatte und einem ersten Kanalabschnitt. Weiter umfasst die Werkstückbearbeitungsvorrichtung eine Saugvorrichtung mit Saugmotor und einem zweiten Kanalabschnitt. Ferner eine Stützeinheit, die einen Aufnahmeraum zur Aufnahme der Saugvorrichtung ausgebildet hat und einen Tragrahmen zum Anordnen des Arbeitstisches in einer vordefinierten Position an der Stützeinheit.

Aus dem Stand der Technik sind bereits Sägetische zur Bearbeitung von Werkstücken bekannt. So offenbart beispielsweise die DE 30 39 459 A1 einen Sägetisch mit einer Schutzvorrichtung für das Stichsägeblatt. Am Sägetisch angeordnet befindet sich ein Absaugrohr, welches an einem freien, offenen Ende an eine Saugvorrichtung, insbesondere an einen Staubsauger angeschlossen werden kann. Über das Rohr können beispielsweise Materialreste und/oder Bearbeitungsnebenprodukte wie Späne vom Sägetisch entfernt werden, so dass die Staubbelastung in der unmittelbaren Bearbeitungsumgebung reduziert werden kann. Vor einer Bearbeitung muss ein Anschluss des Rohres an den Staubsauger erfolgen, woraus ein unvermeidlicher zusätzlicher zeitlicher Aufwand resultiert.

Eine weitere Vorrichtung mit Sägetisch wird durch die US 5 379 815 A offenbart. Die Vorrichtung beinhaltet einen Tisch mit Durchtrittsöffnungen zur Weiterleitung eines Saug- und/oder Blasluftstroms. Der Tisch ist über einen Flansch mit einem Staubsauger verbunden. Auch hier muss vor Inbetriebnahme der Vorrichtung ein Anschluss des Staubsaugers über den Flansch an den Tisch erfolgen. Weiter ist der Staubsauger neben dem Sägetisch angeordnet. Wünschenswert wäre in der Praxis zudem eine verlässliche Passung der Anschlussleitungen. Weiter kann durch die Anordnung des Staubsaugers neben dem Sägetisch der Staubsauger und/oder die Verbindung zwischen Staubsauger und dem Rohr des Sägetisches hinderlich für den Benutzer der Werkstückbearbeitungsvorrichtung während dem Arbeiten sein.

Ferner offenbart die US 6 966 350 B1 einen Schrank mit einem Sägetisch und einem abnehmbaren Staubbehälter. Der Staubbehälter ist hierbei im Inneren des Schrankes angeordnet. Mittel, welche eine aktive Saugvorrichtung zur Beseitigung von Staub aufweisen, zeigt das US-Patent nicht. Häufig bleibt Staub auf der Arbeitsfläche zurück, der beim Arbeitsvorgang hinderlich sein kann und eine spätere Reinigung der Arbeitsfläche notwendig macht.

Eine vorrangige Aufgabe der Erfindung wird darin gesehen, einem Benutzer eine verbesserte Werkstückbearbeitungsvorrichtung zur Verfügung zu stellen, welche die genannten Nachteile nicht aufweist. Weiter sollen diese Nachteile auf möglichst einfache und unkomplizierte Weise vermieden werden können. Die zu lösende Aufgabe besteht insbesondere darin, dem Benutzer eine möglichst einfach handhabbare und seine Fremdkörper- und Staubbelastung während des Arbeitens deutlich reduzierende Vorrichtung zu liefern, die ihn jedoch in seiner Arbeit weder stört noch behindert.

Die obige Aufgabe wird durch eine Werkstückbearbeitungsvorrichtung gelöst, welche die Merkmale des Anspruchs 1 umfasst. Zur Lösung schlägt die Erfindung eine Werkstückbearbeitungsvorrichtung vor, die zur Bearbeitung einer Vielzahl von Werkstücken geeignet ist. Bevorzugt werden mit der erfindungsgemäßen Werkstückbearbeitungsvorrichtung Werkstücke bearbeitet, bei deren Bearbeitung Nebenprodukte, wie beispielsweise Späne, Staub oder dergleichen, entstehen.

Die erfindungsgemäße Bearbeitungsvorrichtung umfasst einen Arbeitstisch, welcher beispielsweise als Sägetisch ausgebildet sein kann. Der Arbeitstisch kann somit eine Säge und/oder weitere Werkzeuge zur Bearbeitung von Werkstücken aufweisen. Der Arbeits- bzw. Sägetisch umfasst eine Tischplatte und einen ersten Kanalabschnitt. Die Tischplatte kann beispielsweise eine ebene Werkstückauflagefläche aufweisen. Die Werkstückauflagefläche kann bspw. mit einer Profilierung versehen sein. Zudem können weitere Klemm- und/oder Fixiermittel zum Halten des Werkstückes während der Bearbeitung vorgesehen sein. Hinsichtlich der geometrischen Ausgestaltung steht dem mit der Konzeption der Vorrichtung befassten Fachmann ein breites Spektrum an Variationsmöglichkeiten zur Verfügung, da Tischplatten zur Bearbeitung von Werkstücken bereits aus dem Stand der Technik bekannt sind und der Fachmann je nach Bedarf aus diesen wählen kann. Beispielsweise können die Tischplatten quaderförmige und/oder runde Formgebungen aufweisen.

Der erste Kanalabschnitt ist derart an der Tischplatte angeordnet, dass Nebenprodukte wie Späne, Sägestaub o. dgl., die während des Bearbeitens eines Werkstückes entstehen, zumindest teilweise von der Tischplatte entfernt werden können. Beispielsweise kann der erste Kanalabschnitt durch die Tischplatte hindurchgreifen und/oder seitlich an der Tischplatte angeordnet sein. Es können ein erster Kanalabschnitt oder auch mehrere erste Kanalabschnitte zur Ausgestaltung der vorliegenden Erfindung in Betracht kommen. Der erste Kanalabschnitt kann beispielsweise einem linearen und/oder einem gebogenem Verlauf folgen. Er kann beispielsweise als Rohr oder als rohrähnliche Konstruktion ausgebildet sein. Im Hinblick auf das verwendete Material kann der erste Kanalabschnitt beispielsweise aus Kunststoff ausgebildet sein. Davon abgesehen kommen auch weitere Materialien in Frage, die dem Fachmann bekannt sind und somit nicht explizit erwähnt werden. In einer Ausführungsform der vorliegenden Erfindung kann der erste Kanalabschnitt zumindest Abschnittsweise mindestens zwei getrennte Leitungen umfassen, durch welche jeweils ein mittels der Saugvorrichtung erzeugter Saugluftstrom leitbar ist. Beispielsweise können die beiden Leitungen parallel nebeneinander angeordnet sein.

Weiter umfasst die Bearbeitungsvorrichtung eine Saugvorrichtung mit Saugmotor und einem zweiten Kanalabschnitt. Der Saugmotor kann bevorzugt als elektrischer Motor ausgebildet sein, so dass die Saugvorrichtung im Wesentlichen als Staubsauger oder dgl. Gerät ausgebildet sein kann. Der zweite Kanalabschnitt kann, ebenso wie der erste Kanalabschnitt, zahlreiche geometrische Formgebungen aufweisen und einem Verlauf folgen, der beispielsweise linear und/oder gebogen ausgebildet sein kann. Der erste Kanalabschnitt und der zweite Kanalabschnitt können adaptiv zueinander ausgebildet sein. Es ist denkbar, dass die Saugvorrichtung zudem als Blasvorrichtung ausgebildet ist.

Der Terminus "Kanal" kann im Rahmen der vorliegenden Erfindung breit verstanden werden. So kann beispielsweise vorgesehen sein, dass der zweite Kanalabschnitt lediglich als Anschlussstück gebildet wird. Weiter kann beispielsweise der zweite Kanalabschnitt durch Mittel, welche einen Saugluftstrom vom ersten Kanalabschnitt an die Saugvorrichtung weiterführen, ausgebildet sein.

Überdies ist eine Stützeinheit vorhanden, die einen Aufnahmeraum zur Aufnahme der Saugvorrichtung ausgebildet hat. In einer Ausführungsform kann die Stützeinheit derart ausgebildet sein, dass sie die Saugvorrichtung im Aufnahmeraum vollständig oder zumindest annäherungsweise vollständig aufnehmen kann. Die Stützeinheit kann derart beschaffen sein, dass eine oder mehrere Seiten offen ausgebildet sind, so dass die Saugvorrichtung in den Aufnahmeraum aufgenommen- und wieder entfernt werden kann,

insbesondere indem sie dort hineingerollt und auch wieder herausgerollt werden kann, ohne bspw. eine Stufe zu überwinden. Weiter kann vorgesehen sein, dass die Saugvorrichtung Bedienelemente aufweist. Nach Aufnahme der Saugvorrichtung in der Stützeinheit können die Bedienelemente beispielsweise auf der offenen Seite der Stützeinheit angeordnet sein, so dass ein Benutzer nach Aufnahme der Saugvorrichtung im Aufnahmeraum der Stützeinheit ungehindert auf die Bedienelemente zugreifen kann. Beispielsweise kann die Stützeinheit Seitenteile beinhalten, die über eine Strebe oder mehrere Streben miteinander verbunden sein können. Auch kann die Stützeinheit beispielweise lediglich über Längs- und Querstreben ausgestaltet sein. Die Längsstreben können in einer bevorzugten Ausführungsform an einem dem Boden zugewandten freien Ende Stellbeine aufweisen. Die Stellbeine können beispielsweise mit Profilen ausgebildet sein. Weiter kann für die materielle Ausgestaltung der Stützbeine ein unterschiedliches Material, als das für die Streben verwendete Material, herangezogen werden, um die Haftreibung zwischen den Stellbeinen und dem Boden optimiert auszugestalten.

Die Stützeinheit besitzt des Weiteren einen Tragrahmen zum Anordnen des Sägetisches in einer vordefinierten Position. Der Begriff Tragrahmen muss im Zusammenhang mit der vorliegenden Erfindung breit ausgelegt werden. Insofern kommen jegliche Konstruktionen als Tragrahmen in Betracht, die eine Fixierung des Arbeitstisches an der Stützeinheit erlauben. Beispielsweise kann der Arbeitstisch über Schraub-und/oder Klemm- und/oder Rast- und/oder Schnappverbindungen an der Stützeinheit gehalten sein. Auch kann der Arbeitstisch beispielsweise durch Formschluss und/oder Kraftschluss an der Stützeinheit gehalten sein. Zudem ist vorstellbar, dass der Arbeitstisch lediglich auf der Stützeinheit bzw. auf dem Rahmen der Stützeinheit aufgelegt und/oder aufgesetzt ist.

Des Weiteren ist der Arbeitstisch in einer vordefinierten Position an der Stützeinheit angeordnet. Die vordefinierte Position sollte bzw. muss derart sein, dass bei einer ordnungsgemäßen Anordnung der Saugvorrichtung im Aufnahmeraum der erste und der zweite Kanalabschnitt weitgehend dichtend ineinander greifen und/oder derart miteinander verbunden sind, dass ein mittels der Saugvorrichtung erzeugter Saugluftstrom durch den ersten und den zweiten Kanalabschnitt leitbar ist. Da der Arbeitstisch den ersten Kanalabschnitt umfasst, können Nebenprodukte, welche während der Werkstückbearbeitung entstehen, über den ersten Kanalabschnitt weiter an den zweiten Kanalabschnitt und anschließend an die Saugvorrichtung geführt werden. Die Saugvorrichtung kann beispielsweise über einen Sammelbehälter und/oder Sammelraum verfügen, in welchen die Nebenprodukte über den ersten und den zweiten Kanalabschnitt geleitet werden. Es ist vorstellbar, dass die Saugvorrichtung über einen Sammelbehälter verfügt, der sich im Innenraum der Saugvorrichtung befindet. Der Sammelbehälter kann hierbei entnehmbar in der Saugvorrichtung angeordnet sein. Hierbei können beispielsweise der erste und der zweite Kanalabschnitt als Rohr ausgebildet sein, wobei einer der beiden Kanalabschnitte einen größeren Durchmesser als der andere Kanalabschnitt aufweist, so dass das etwas größere Rohr das kleinere Rohr umfassen kann, wobei vorzugsweise gleichzeitig eine ausreichende Abdichtung entsteht. Es ist vorstellbar, dass mehrere vordefinierte Positionen betreffend die Anordnung des Sägetisches an der Stützeinheit existieren. Auch ist vorstellbar, dass der erste und der zweite Kanalabschnitt über ggf. zusätzliche lösbare Verbindungen, wie beispielsweise Rast- und/oder Schnapp- und/oder Klemmverbindungen aneinander gehalten werden können.

In einer bevorzugten Ausführungsform der vorliegenden Erfindung kann die Werkstückbearbeitungsvorrichtung eine Säge mit Sägeblatt umfassen. Das Sägeblatt kann zumindest teilweise durch die Tischplatte hindurchgreifen. Beispielsweise kann das Sägeblatt als Kreis- oder als Längssägeblatt ausgebildet sein.

Auch kann der Arbeitstisch Ausrichtemittel für das Werkstück umfassen. Die Ausrichtemittel können beispielsweise einen oder mehrere Schiebeanschläge umfassen. Auch können Mittel zur Positionsfixierung von Werkstücken vorgesehen sein. Die Mittel können beispielsweise Elemente zur klemmenden Fixierung des Werkstückes auf der Tischplatte umfassen.

Außerdem kann der Arbeitstisch ein- oder mehrere Beleuchtungsmittel aufweisen. Die Beleuchtungsmittel können beispielsweise als LED-Leuchten ausgebildet sein und ggf. schwenkbar und/oder verstellbar an der Tischplatte angeordnet sein.

In einer weiteren Ausführungsform der vorliegenden Erfindung weist die Saugvorrichtung eine Verbindungsstelle zum Anschluss einer Saugdüse auf. Die Saugdüse kann analog zu der aus dem Stand der Technik bekannten Saugdüse eines Staubsaugers ausgestaltet sein. Weiter kann die Saugdüse derart mit der Saugvorrichtung in Wirkzusammenhang stehen, dass durch die Saugdüse ein Saug-und/oder Blasvolumenstrom sämtlicher fluider Medien, beispielsweise von Wasser, Luft oder Dampf, erfolgen kann. Demnach kann die Saugdüse nicht nur zum Trockenreinigen sondern auch zum Nassreinigen von Oberflächen verwendet werden. Es können Bedienelemente an der Saugvorrichtung angeordnet sein, um zwischen einem Nass- und Trockenvolumenstrom zu wählen, welcher über die Saugdüse leitbar ist.

Um den Transport der Saugvorrichtung zu erleichtern, können an der Saugvorrichtung mindestens ein Laufrad, vorzugsweise aber zwei oder vier Laufräder, angeordnet sein, ähnlich wie dies bei handelsüblichen und bekannten Staubsaugern der Fall ist. Es kann vorgesehen sein, dass die Saugvorrichtung vordere und hintere Laufräder umfasst, wobei die vorderen Laufräder im Bereich des zweiten Kanalabschnitts und die hinteren Laufräder im Bereich der Saugdüse angeordnet sind. Weiter kann vorgesehen sein, dass der relative Abstand zwischen den vorderen Laufrädern geringer ist als der relative Abstand zwischen den hinteren Laufrädern. Ein oder mehrere Laufräder können eine Profilierung aufweisen.

Im Folgenden sollen Ausführungsbeispiele die Erfindung und ihre Vorteile anhand der beigefügten Figuren näher erläutern. Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt.
Fig. 1 zeigt eine Perspektivansicht einer Ausführungsform einer erfindungsgemäßen Werkstückbearbeitungsvorrichtung.
Fig. 2 zeigt eine weitere Perspektivansicht einer Ausführungsform der Werkstückbearbeitungsvorrichtung.
Fig. 3 zeigt eine Perspektivansicht einer Ausführungsform einer Stützeinheit einer Werkstückbearbeitungsvorrichtung.
Fig. 4 zeigt eine Perspektivansicht einer Ausführungsform eines Sägetisches der Werkstückbearbeitungsvorrichtung.
Fig. 5 zeigt eine perspektivische Seitenansicht des Sägetisches.
Fig. 6 zeigt eine perspektivische Draufsicht von unten auf den Sägetisch.
Fig. 7 zeigt eine perspektivische Ansicht von hinten auf eine Saugvorrichtung der Werkstückbearbeitungsvorrichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Vorrichtung ausgestaltet sein kann und stellen keine abschließende Begrenzung dar.

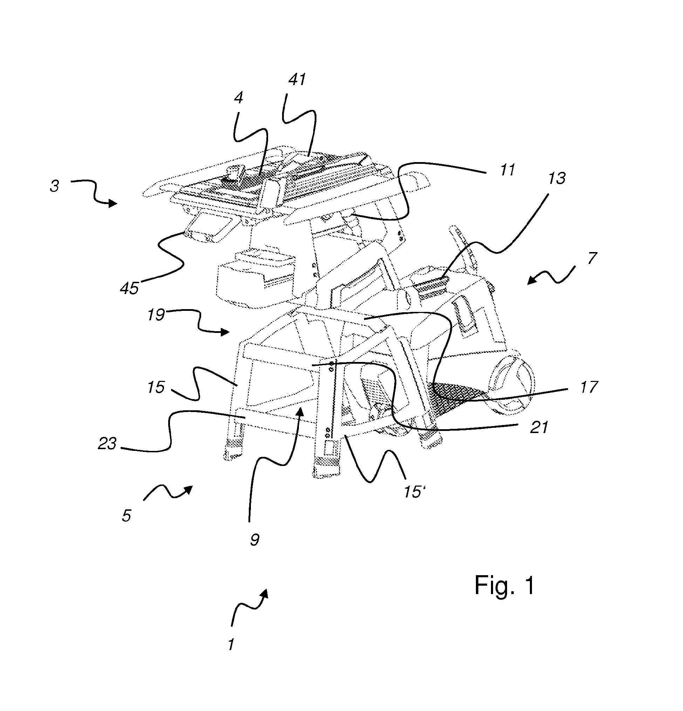

Die schematische Perspektivansicht der Fig. 1 zeigt eine Ausführungsform einer Werkstückbearbeitungsvorrichtung 1 der beanspruchten Art. Dargestellt ist ein Arbeitstisch, insbesondere ein Sägetisch 3 mit Tischplatte 4 und erstem Kanalabschnitt 11, weiterhin die Stützeinheit 5 mit Aufnahmeraum 9. Erkennbar ist ferner die Saugvorrichtung 7 mit Saugmotor (nicht dargestellt; integrativer Bestandteil der Saugvorrichtung 7) und mit zweitem Kanalabschnitt 13. Der Tragrahmen 19, Bestandteil der Stützeinheit 5, setzt sich vorliegend aus dem ersten und dem zweiten Seitenteil 15 und 15', der Stützstrebe 17 und der Querstrebe 21 zusammen. Weiter ist in der gezeigten Ausführungsform eine optionale zusätzliche Strebe 23 zur Stabilisierung an der Stützeinheit 5 angeordnet. Am Sägetisch 3 ist weiter ein Eingabemittel 45 angeordnet, welches als Touchscreen ausgebildet sein kann und über welches ein oder mehreren Komponenten der Werkstückbearbeitungsvorrichtung 1, wie beispielsweise die Säge 41, gesteuert werden können.

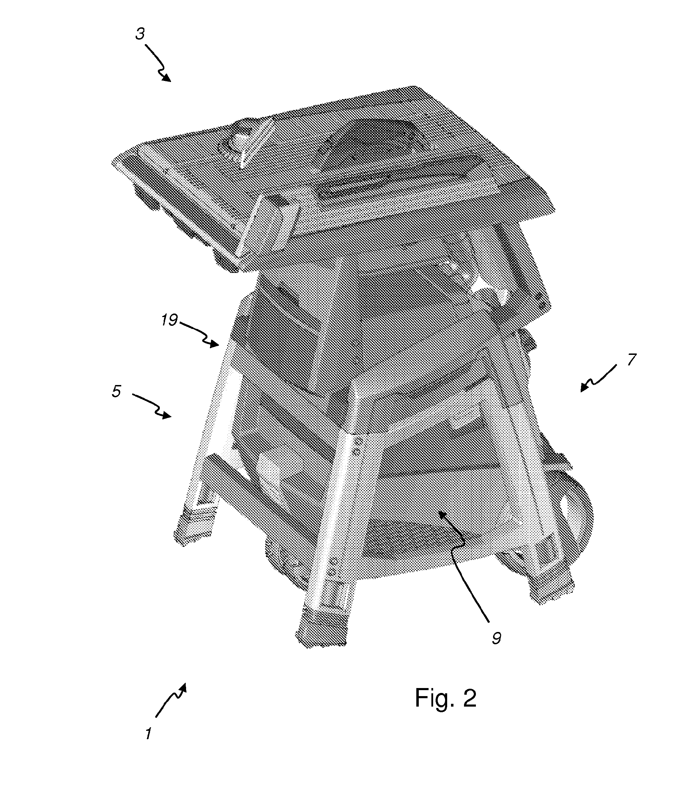

Fig. 2 zeigt eine weitere Perspektivansicht der erfindungsgemäßen Werkstückbearbeitungsvorrichtung 1 entsprechend Fig. 1. Der Sägetisch 3 ist am Tragrahmen 19 der Stützeinheit 5 angeordnet. Ferner befindet sich die Saugvorrichtung 7 im Aufnahmeraum 9 der Stützeinheit 5. Der erste Kanalabschnitt 11 und der zweite Kanalabschnitt 13 (siehe Fig. 1) greifen ineinander.

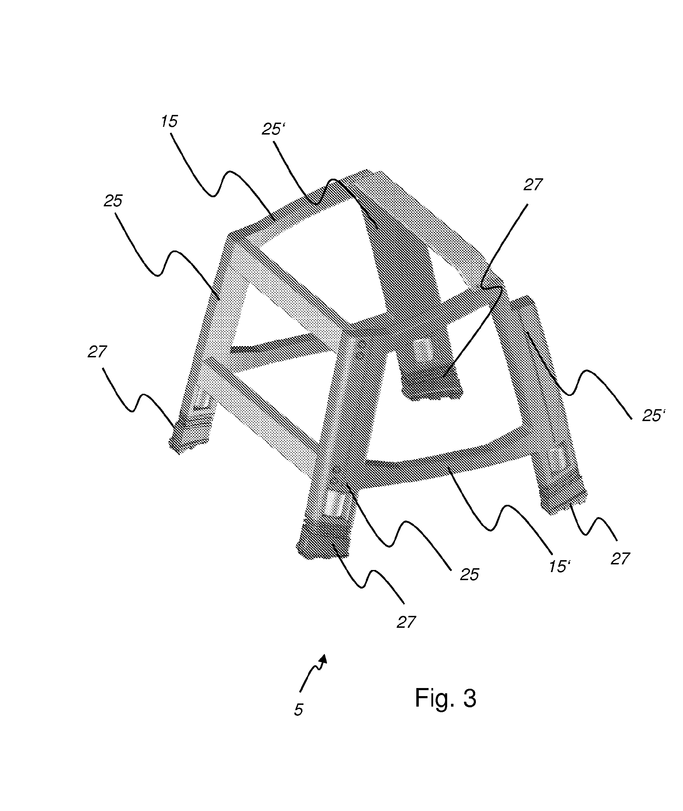

Die Perspektivansicht der Fig. 3 zeigt die Stützeinheit 5 ohne die darauf befindliche Werkstückbearbeitungsvorrichtung 1. Die Stützeinheit 5 umfasst einen ersten Seitenteil 15 und einen zweiten Seitenteil 15'. Jedes der beiden Seitenteile 15 und 15' besitzt eine erste Längsstrebe 25 und eine zweite Längsstrebe 25'. An den freien Enden der Längsstreben 25 und 25' sind Stellbeine 27 angeordnet. Die Seitenteile 15 und 15' sind jeweils einstückig ausgebildet.

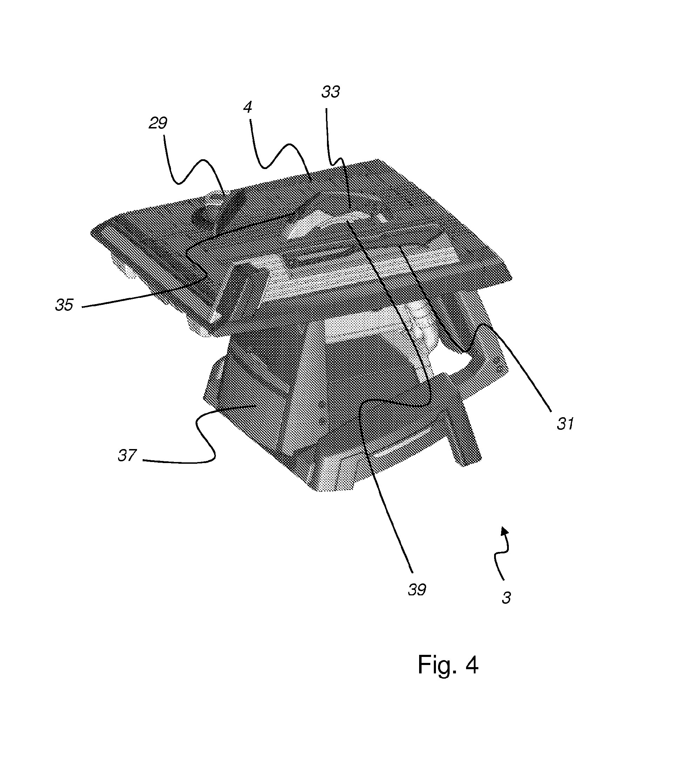

Die Perspektivansicht der Fig. 4 zeigt den Sägetisch 3 mit Tischplatte 4 einer

Werkstückbearbeitungsvorrichtung 1 der beanspruchten Art. Der Sägetisch 3 umfasst im gezeigten Ausführungsbeispiel Ausrichtemittel für das Werkstück, die als Schiebeanschläge 29, 31 ausgebildet sind. Auch umfasst der Sägetisch eine Abdeckhaube 33 für das Sägeblatt 39. Im gezeigten Ausführungsbeispiel ist in die Abdeckhaube 33 ein Beleuchtungsmittel 35, vorliegend als LED-Leuchte ausgebildet, integriert. Das Sägeblatt 39 greift durch die Tischplatte 4. Der Sägetisch 3 kann zudem ein- oder mehrere Fächer 37 aufweisen, in denen Zubehör, wie beispielsweise Sägeblätter 39, abgelegt sein können.

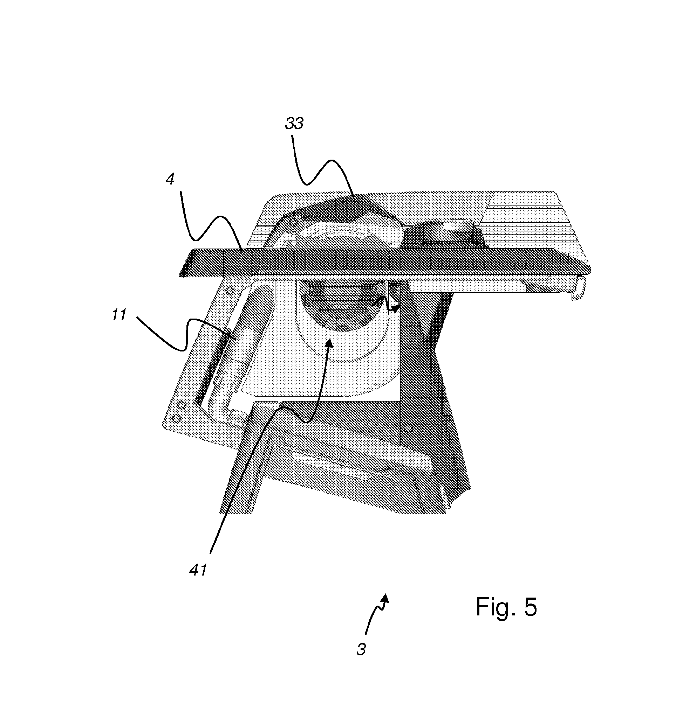

Die Seitenansicht der Fig. 5 verdeutlicht nochmals den Sägetisch 3 der Werkstückbearbeitungsvorrichtung 1. In der gezeigten Ausführungsform werden Nebenprodukte, wie beispielsweise Sägespäne, über die Abdeckhaube 33 an den ersten Kanalabschnitt 11 weitergeleitet. Die Säge 41 ist unter der Tischplatte 4 angeordnet. Das Sägeblatt 39 greift jedoch, wie in Fig. 4 gezeigt, durch die Tischplatte 4 hindurch.

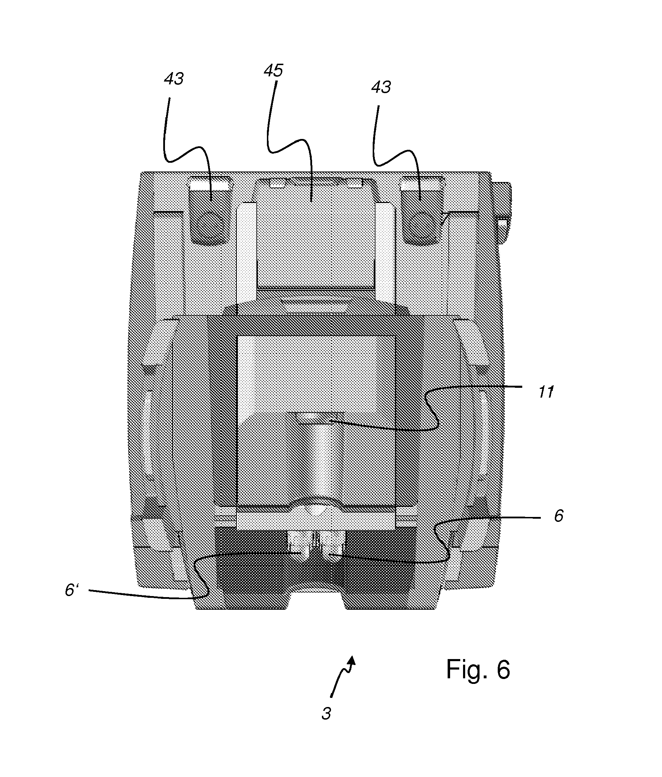

Die schematische Draufsicht von unten der Fig. 6 zeigt den Sägetisch 3 der Werkstückbearbeitungsvorrichtung 1. Der Sägetisch 3 weist elektrische Anschlüsse 43 zum Anschluss an ein elektrisches Leitungsnetz auf. Weiter ist der erste Kanalabschnitt 11 dargestellt. Der erste Kanalabschnitt 11 teilt sich während seines Verlaufs in eine erste Leitung 6 und eine zweite Leitung 6'. In der gezeigten Ausführungsform umfasst der Sägetisch 3 ein Eingabemittel 45, das schwenkbar am Sägetisch 3 gehalten ist. Das Eingabemittel 45 ist vorliegend als Touchscreen ausgebildet. Durch das Eingabemittel 45 können Einstellungen, beispielsweise über den Betrieb der Säge 41 (dargestellt in Fig. 5), vorgenommen werden.

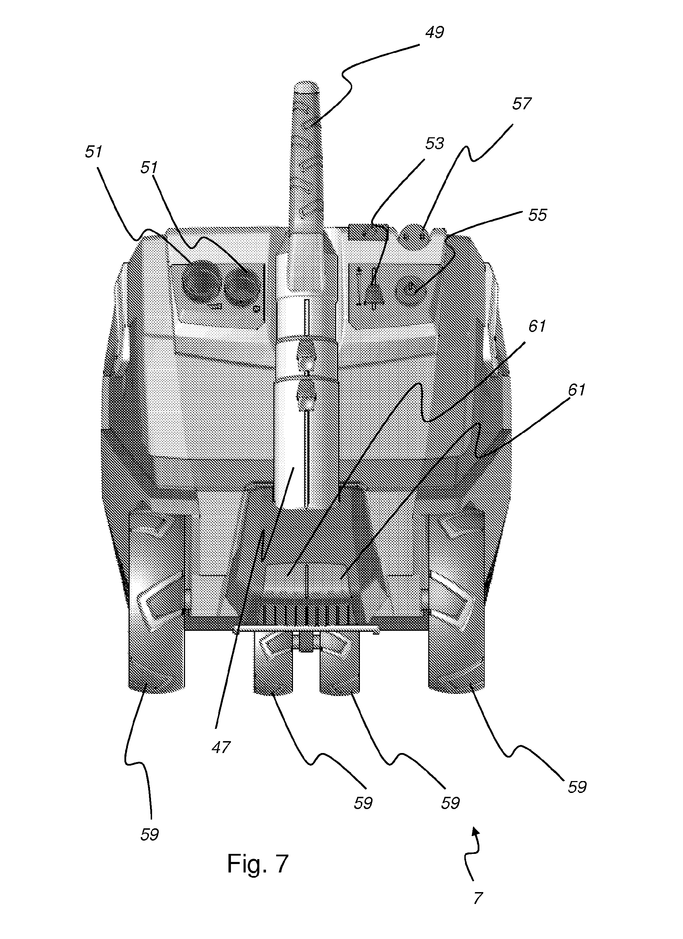

Die Frontalansicht auf die Rückseite der Saugvorrichtung 7 gemäß Fig. 7 verdeutlicht mehrere Adapterstücke 51 für die Saugdüse, die an der Saugvorrichtung 7 angeordnet sind. Weiter umfasst die Saugvorrichtung 7 einen Handgriff 49 sowie einen Leistungsregler 53, einen elektrischen Steckverbinder 57 zum Anschluss der Saugvorrichtung 7 an ein Leitungsnetz, einen Schalter 55 für die Inbetriebnahme der Saugvorrichtung 7 und Schalter 61 zum ändern der Betriebsmodi der Saugvorrichtung 7. In der gezeigten Ausführungsform kann mittels der Schalter 61 zwischen einem Luft- oder Dampfvolumenstrom gewählt werden, der über die Verbindungsstelle 47 zur Saugdüse weitergeleitet wird. Die Verbindungsstelle 47 ist teleskopierbar ausgebildet. Zudem sind zum einfachen Transport der Saugvorrichtung 7 mehrere Laufräder 59 an der Saugvorrichtung 7 angeordnet.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Werkstückbearbeitungsvorrichtung
- 3: Sägetisch
- 4: Tischplatte
- 5: Stützeinheit
- 6: Leitung
- 7: Saugvorrichtung
- 9: Aufnahmeraum
- 11: Erster Kanalabschnitt
- 13: Zweiter Kanalabschnitt
- 15: Erstes Seitenteil
- 15': Zweites Seitenteil
- 17: Stützstrebe
- 19: Tragrahmen
- 21: Querstrebe
- 23: Zusätzliche Querstrebe
- 25: Erste Längsstrebe
- 25': Zweite Längsstrebe
- 27: Stellbein
- 29: Erstes Ausrichtemittel
- 31: Zweites Ausrichtemittel
- 33: Abdeckhaube
- 35: Beleuchtungsmittel
- 37: Fach
- 39: Sägeblatt
- 41: Säge
- 43: Elektrischer Anschluss
- 45: Eingabemittel
- 47: Verbindungsstelle für Saugdüse
- 49: Handgriff
- 51: Adapterstück
- 53: Leistungsregler
- 55: Schalter für Inbetriebnahme
- 57: Elektrischer Steckverbinder
- 59: Laufrad
- 61: Schalter für Betriebsmodi

## Patentansprüche

1. Werkstückbearbeitungsvorrichtung (1),
- mit einem Arbeitstisch (3) mit Tischplatte (4) und einem ersten Kanalabschnitt (11),
- mit einer Saugvorrichtung (7) mit Saugmotor und einem zweiten Kanalabschnitt (13), und
- mit einer Stützeinheit (5), die einen Aufnahmeraum (9) zur Aufnahme der Saugvorrichtung (7) ausgebildet hat und einen Tragrahmen (19) zum Anordnen des Arbeitstisches (3) in einer vordefinierten Position an der Stützeinheit (5) umfasst, **dadurch gekennzeichnet, dass** bei einer Anordnung des Arbeitstisches (3) in der vordefinierten Position an der Stützeinheit (5) und bei Anordnung der Saugvorrichtung (7) im Aufnahmeraum (9) der Stützeinheit (5) der erste und der zweite Kanalabschnitt (11, 13) ineinandergreifen und/oder derart miteinander verbunden sind, dass ein mittels der Saugvorrichtung (7) erzeugter Saugluftstrom durch den ersten und den zweiten Kanalabschnitt (11, 13) leitbar ist.

2. Werkstückbearbeitungsvorrichtung nach Anspruch 1, die eine Säge (41) mit Sägeblatt (39) umfasst, welches zumindest teilweise durch die Tischplatte (4) hindurchgreift.

3. Werkstückbearbeitungsvorrichtung nach Anspruch 1 oder 2, wobei der Arbeitstisch (3) Ausrichtemittel (29, 31) für das Werkstück umfasst.

4. Werkstückbearbeitungsvorrichtung nach einem der Ansprüche 1 bis 3, wobei der Arbeitstisch (3) wenigstens ein Beleuchtungsmittel (35) umfasst.

5. Werkstückbearbeitungsvorrichtung nach einem der Ansprüche 1 bis 4, wobei der Sägetisch (3) über Rast- und/oder Klemm- und/oder Schnappverbindungen mit dem Tragrahmen (19) der Stützeinheit (5) verbunden ist.

6. Werkstückbearbeitungsvorrichtung nach einem der Ansprüche 1 bis 5, wobei die Stützeinheit (5) zwei Seitenteile (15, 15') und mindestens eine Querstrebe (21) zum Verbinden der beiden Seitenteile (15, 15') umfasst, und wobei jeweils ein Seitenteil (15, 15') zwei Längsstreben (25, 25') aufweist und an dem jeweils freien Ende einer Längsstrebe (25, 25') ein Stellbein (27) angeordnet ist.

7. Werkstückbearbeitungsvorrichtung nach einem der Ansprüche 1 bis 6, wobei die Saugvorrichtung (7) eine Verbindungsstelle (47) zum Anschluss einer Saugdüse aufweist.

8. Werkstückbearbeitungsvorrichtung nach einem der Ansprüche 1 bis 7, wobei an der Saugvorrichtung (7) mindestens ein Laufrad (59) angeordnet ist.

9. Werkstückbearbeitungsvorrichtung nach einem oder mehreren der vorhergehenden Ansprüche, wobei der erste Kanalabschnitt (11) zumindest Abschnittsweise mindestens zwei getrennte Leitungen (6, 6') umfasst, durch welche jeweils ein mittels der Saugvorrichtung (7) erzeugter Saugluftstrom leitbar ist.

## Geänderte Patentansprüche

### Geänderte Patentansprüche gemäss Regel 137(2) EPÜ.

**1.** Werkstückbearbeitungsvorrichtung (1),
- mit einem Arbeitstisch (3) mit Tischplatte (4) und einem ersten Kanalabschnitt (11),
- mit einer Saugvorrichtung (7) mit Saugmotor und einem zweiten Kanalabschnitt (13), und
- mit einer Stützeinheit (5), die einen Aufnahmeraum (9) zur Aufnahme der Saugvorrichtung (7) ausgebildet hat und einen Tragrahmen (19) zum Anordnen des Arbeitstisches (3) in einer vordefinierten Position an der Stützeinheit (5) umfasst, **dadurch gekennzeichnet, dass** bei einer Anordnung des Arbeitstisches (3) in der vordefinierten Position an der Stützeinheit (5) und bei Anordnung der Saugvorrichtung (7) im Aufnahmeraum (9) der Stützeinheit (5) der erste und der zweite Kanalabschnitt (11, 13) ineinandergreifen und/oder derart miteinander verbunden sind, dass ein mittels der Saugvorrichtung (7) erzeugter Saugluftstrom durch den ersten und den zweiten Kanalabschnitt (11, 13) leitbar ist und die Stützeinheit (5) derart beschaffen ist, dass eine oder mehrere Seiten offen ausgebildet sind, so dass die Saugvorrichtung (7) in den Aufnahmeraum (9) aufnehmbar und wieder entfernbar ist.

**2.** Werkstückbearbeitungsvorrichtung nach Anspruch 1, die eine Säge (41) mit Sägeblatt (39) umfasst, welches zumindest teilweise durch die Tischplatte (4) hindurchgreift.

**3.** Werkstückbearbeitungsvorrichtung nach Anspruch 1 oder 2, wobei der Arbeitstisch (3) Ausrichtemittel (29, 31) für das Werkstück umfasst.

**4.** Werkstückbearbeitungsvorrichtung nach einem der Ansprüche 1 bis 3, wobei der Arbeitstisch (3) wenigstens ein Beleuchtungsmittel (35) umfasst.

**5.** Werkstückbearbeitungsvorrichtung nach einem der Ansprüche 1 bis 4, wobei der Sägetisch (3) über Rast- und/oder Klemm- und/oder Schnappverbindungen mit dem Tragrahmen (19) der Stützeinheit (5) verbunden ist.

**6.** Werkstückbearbeitungsvorrichtung nach einem der Ansprüche 1 bis 5, wobei die Stützeinheit (5) zwei Seitenteile (15, 15') und mindestens eine Querstrebe (21) zum Verbinden der beiden Seitenteile (15, 15') umfasst, und wobei jeweils ein Seitenteil (15, 15') zwei Längsstreben (25, 25') aufweist und an dem jeweils freien Ende einer Längsstrebe (25, 25') ein Stellbein (27) angeordnet ist.

**7.** Werkstückbearbeitungsvorrichtung nach einem der Ansprüche 1 bis 6, wobei die Saugvorrichtung (7) eine Verbindungsstelle (47) zum Anschluss einer Saugdüse aufweist.

**8.** Werkstückbearbeitungsvorrichtung nach einem der Ansprüche 1 bis 7, wobei an der Saugvorrichtung (7) mindestens ein Laufrad (59) angeordnet ist.

**9.** Werkstückbearbeitungsvorrichtung nach einem oder mehreren der vorhergehenden Ansprüche, wobei der erste Kanalabschnitt (11) zumindest Abschnittsweise mindestens zwei getrennte Leitungen (6, 6') umfasst, durch welche jeweils ein mittels der Saugvorrichtung (7) erzeugter Saugluftstrom leitbar ist.
